## Europäisches Patentamt

## European Patent Office

## Office européen des brevets

(19)

(11) Veröffentlichungsnummer: **0 212 491**
**B1**

(12) **EUROPÄISCHE PATENTSCHRIFT**

(45) Veröffentlichungstag der Patentschrift: **13.06.90**

(21) Anmeldenummer: **86110973.4**

(22) Anmeldetag: **08.08.86**

(51) Int. Cl.⁵: **G 01 G 23/16,** H 05 B 7/152,
C 22 B 9/18

(54) **Verfahren und Einrichtung zum Kompensieren des Einflusses des Gewichts einer Stromzuführungsleitung auf eine Gewichtsmesseinrichtung.**

(30) Priorität: **12.08.85 DE 3528867**

(43) Veröffentlichungstag der Anmeldung:
**04.03.87 Patentblatt 87/10**

(45) Bekanntmachung des Hinweises auf die
Patenterteilung:
**13.06.90 Patentblatt 90/24**

(84) Benannte Vertragsstaaten:
**AT DE FR GB IT**

(56) Entgegenhaltungen:
**EP-A-0 042 689**
**DE-A-1 934 218**
**US-A-4 131 754**

(73) Patentinhaber: **LEYBOLD AKTIENGESELLSCHAFT**
**Wilhelm-Rohn-Strasse 25**
**D-6450 Hanau am Main 1 (DE)**

(72) Erfinder: **Stenzel, Otto, Dr.**
**Vonhäuserstrasse 50**
**D-6466 Gründau 4 (DE)**

(74) Vertreter: **Schickedanz, Willi, Dipl.-Ing.**
**Langener Strasse 68**
**D-6050 Offenbach/Main (DE)**

## Beschreibung

Die Erfindung betrifft ein Verfahren und eine Einrichtung zum Kompensieren des Einflusses des Gewichts einer Stromzuführungsleitung auf eine Gewichtsmeßeinrichtung, welche das Gewicht einer Elektrode und/oder die Abschmelzrate bei einem Elektroschlackenumschmelzverfahren, bei einem Vakuumlichtbogenofen oder dergleichen erfaßt.

Bei Vakuumlichtbogenöfen und Elektroschlackenumschmelzöfen wird vielfach die Abschmelzrate der Elektrode mit Hilfe einer sogenannten Schmelzratenregelung konstant gehalten. Hierbei wird das aktuelle Elektrodengewicht ermittelt und aus der Änderung des Elektrodengewichts die Schmelzrate bestimmt. Der so gewonnene Wert für die Ist-Schmelzrate wird mit einer Soll-Schmelzrate verglichen, und der Differenzwert wird zur Bestimmung eines Vorgabewerts für die Schmelzstromversorgung verwendet. Der Strom durch die Elektrode und die Elektrodenstange wird über kurze und flexible Hochstromleitungen gegeben, die auf einem nicht mitgewogenen Stützpunkt geführt sind, welcher die vertikalen Elektrodenbewegungen nicht mit ausführt. Von hier aus führen lange, bewegliche Leitungen, die den Hub der Elektrodenstange ausgleichen, zu einem ortsfesten Punkt am Ofen. Hierdurch werden die unterschiedlichen Kräfte aus der Bewegung der langen beweglichen Leitungen eliminiert.

Es ist bereits bekannt, mit Hilfe einer besonderen Elektrodenverstelleinrichtung die Winkellage eines Elektrodenhaltekörpers zu verändern, wobei die Verstelleinrichtung zwei definierte Schwenkachsen aufweist, die rechtwinklig zueinander stehen und denen unabhängig voneinander betätigbare Verstellantriebe zugeordnet sind (DE—OS 2 095 752). Um bei einem Schmelzofen mit dieser besonderen Elektrodenverstelleinrichtung den Einfluß der Stromzuführungsleitungen mit Hilfe einer Vorrichtung zu eliminieren, wie sie beispielsweise in der DE—PS 1 918 713 beschrieben ist, ist ein verhältnismäßig hoher mechanischer Aufwand erforderlich, z.B. durch die Schaffung eines weiteren mitgewogenen Zwischenstützpunkts der Stromkabel.

Bei einer weiteren bekannten Einrichtung für Schmelzöfen, die Mittel zur Steuerung des Vorschubs der Abschmelzelektrode in Abhängigkeit von elektrischen Daten vorgesehen sind, wird ein Bauteil eingesetzt, dessen elektrischer Widerstand zug- oder druckabhängig ist (DE—AS 1 157 739). Der Einfluß des Gewichts der Stromzuführungsleitung wird mit dieser Einrichtung jedoch nicht eliminiert. Dies trifft auch für ein Verfahren und eine Anordnung zum Regeln der Lichtbogenlänge beim Vakuumlichtbogenschmelzen zu, wie sie in der DE—OS 31 34 062 beschrieben sind.

Bei einer anderen bekannten Methode für die Regelung der Elektrodenanantriebsgeschwindigkeit wird diese Geschwindigkeit mit einer Grundgeschwindigkeit geregelt, die aus den gemessenen Änderungen der physikalischen Charakteristiken der Elektrode, beispielsweise aus der Gewichtsänderung beim Schmelzprozeß, errechnet wird (US—PS 4 303 797). Bei der Ermittlung der Grundgeschwindigkeit wird auch die bekannte Geometrie der Elektrode, des Schmelzofens oder -tiegels, die Dichte des Eingabematerials sowie die Bewegung des Bodens des Einlasses, falls vorhanden, berücksichtigt, jedoch nicht das Gewicht der Stromzuführungsleitungen.

Auch bei anderen bekannten Verfahren zur Regelung des Abschmelzvorgangs von selbstverzehrenden Elektroden ist keine Möglichkeit der Kompensation des Zuleitungsgewichts vorgesehen (vergl.z.B. GB—PS 11 36 964).

Der Erfindung liegt deshalb die Aufgabe zugrunde, ein Verfahren und eine Einrichtung zu schaffen, mit denen es möglich ist, ohne mechanische Hilfsmittel den Gewichtsfehler zu eliminieren, der aus einer x-y-Verstellung durch Verbiegen der Stromkabel zwischen dem gewogenen und dem ungewogenen Anlagenteil besteht.

Diese Aufgabe wird erfindungsgemäß durch ein Verfahren nach dem Anspruch 1 und eine Einrichtung nach dem Anspruch 10 gelöst.

Ein Ausführungsbeispiel der Erfindung ist in der Zeichnung dargestellt und wird im folgenden näher beschrieben. Es zeigen:

Fig. 1 eine erfindungsgemäße Einrichtung mit einer Steuerung für eine Abschmelzelektrode;

Fig. 2 eine Darstellung zur Erläuterung des Prinzips der Erfindung.

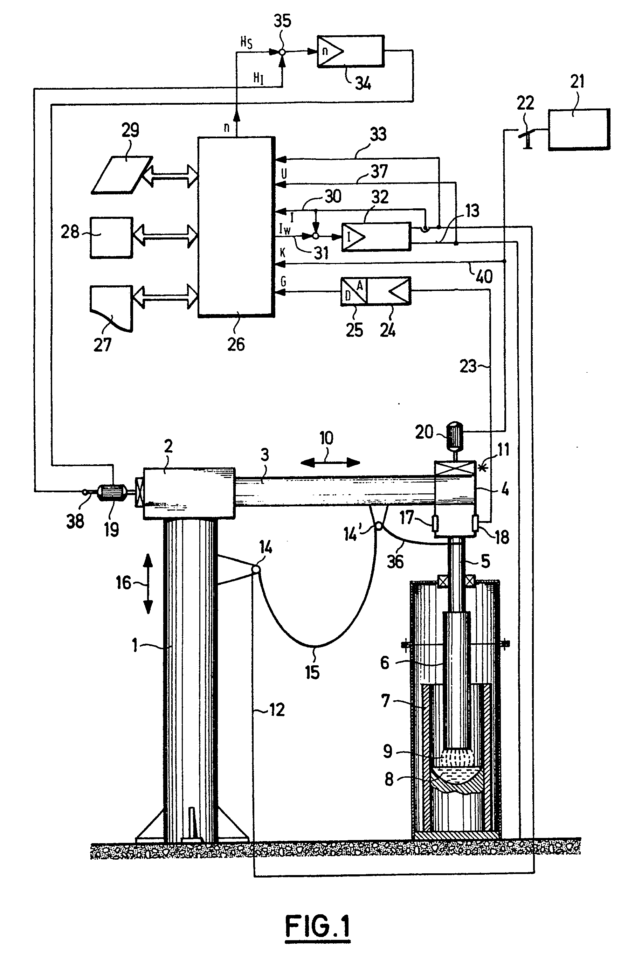

In der Fig. 1 ist eine erfindungsgemäße Einrichtung gezeigt, die eine Standsäule 1 aufweist, welche einen Elektrodenwagen 2 führt, der einen Elektroden-Tragarm mit einer Elektroden-Einspannvorrichtung 4 trägt. An dieser Elektroden-Einspannvorrichtung 4 ist eine Elektrodenstange 5 befestigt, welche eine Abschmelzelektrode 6 enthält, die in eine Standkokille 7 hineinragt. Am Boden dieser Standkokille 7 befindet sich ein Block 8 erstarrten Materials, das zuvor von der Abschmelzelektrode 6 abgeschmolzen wurde. Zwischen diesem Block 8 und der Abschmelzelektrode 6 ist ein Lichtbogen dargestellt.

Die Elektroden-Einspannvorrichtung 4 kann in x- und in y-Richtung bewegt werden, was durch die Pfeile 10 und 11 angedeutet ist. Die elektrische Energie, die zum Schmelzen der Elektrode 6 erforderlich ist, wird über die Leitungen 12, 13 zugeführt, und zwar liegt an dem Block 8 die eine Polarität einer Gleichspannung, während an der Elektrodenstange 5 die andere Polarität dieser Gleichspannung anliegt. Die am Block 8 liegende Gleichspannung ist über die Leitung 13 zugeführt, bei der es sich um ein relativ dickes Kabel handelt, das fest verlegt ist und das während des Betriebs der Einrichtung seine räumliche Lage nicht verändert.

Dagegen ist die Leitung 12 über Leitungsführungen 14 bzw. 14' an die Elektrodenstange 5 herangeführt. Zwischen den Leitungsführungen 14 und 14' bildet die Leitung 12 eine U-förmige Schlaufe 15. Eine derart lose Heranführung der Leitung 12 ist erforderlich, weil sich der

Elektrodenwagen 2 auf der Standsäule 1 in vertikaler Richtung bewegen kann, was durch den Pfeil 16 angedeutet ist. Die elektrische Verbindung zwischen der Leitungsführung 14' und der Elektrodenstange 5 bildet das flexible Leitungsstück 36. Es verbindet strommäßig die gewogene Elektrodenstange 5 mit der bewegten, ungewogenen langen Stromleitung 15. Bewegt sich der Elektrodenwagen nach unten, so wird auch die Schlaufe 15 größer. Mit 17, 18 sind Gewichtsmeßdosen bezeichnet.

Für die Bewegung der Elektrodenstange 5 und damit der Elektrode 6 sind zwei Antriebe 19, 20 vorgesehen. Hierbei ist der Antrieb 19 für die vertikale Bewegung des Elektrodenwagens, also gewissermaßen für die z-Richtung verantwortlich, während der Antrieb 20 für die Bewegung der Elektroden-Einspannvorrichtung in x- oder y-Richtung zuständig ist. Die Energieversorgung des Antriebs 20 ist durch die Energieversorgungseinrichtung 21 und den Schalter 22 gewährleistet.

Von den Gewichtsmeßdosen 17, 18 führt eine Leitung 23, auf welcher Meßdaten in Form von elektrischen Daten übertragen werden, zu einem Meßverstärker 24, dem ein Analog/Digital-Wandler 25 nachgeschaltet ist. Da der Meßverstärker 24 und der A/D-Wandler als einheitliches Bauelement ausgebildet sein können, sind sie nicht getrennt dargestellt. Der Ausgang des A/D-Wandlers 25 ist auf einen Mikrocomputer 26 gegeben, der einen Drucker 27 und/oder einen Bildschirm 28 ansteuert und der über ein Tastenfeld 29 bedient werden kann. Der Mikrocomputer 26 verarbeitet die ihm zugeführten Informationen und steuert über die Steuerleitungen 30, 31 eine Stromversorgungseinrichtung 32, an der die Leitungen 12, 13 liegen.

Die über die Leitungen 12, 13 fließenden Ströme werden durch die Leitung 33 erfaßt und an den Mikrocomputer 26 rückgemeldet. Dieser beaufschlagt nun eine Addierstelle 35 einer Motorsteuerschaltung 34 mit einem Sollwert $H_s$, von dem der durch einen Tachogenerator 38 erzeugte Istwert $H_I$ abgezogen wird. Die Differenz zwischen Soll- und Istwert wird der Motorsteuerschaltung 34 zugeführt, die den Motor 19 in entsprechender Weise ansteuert. Die Verstellungen, die der Motor 20 vornimmt, werden über die Leitung 36 ebenfalls an den Mikrocomputer 26 gemeldet.

Zu Beginn des Elektrodenschmelzvorgangs wird das Gewicht der Elektrode 6, d.h das Gewicht der Elektrode 6 zuzüglich des Tara-Gewichts der Elektrodenstange 5, gemessen und über die Leitung 23, den Verstärker 24 und den A/D-Wandler 25 dem Mikrocomputer 26 zugeführt. Diese Gewichtsmessung erfolgt für eine bestimmte Zeit $\Delta t_1$, innerhalb welcher der Gewichtseinfluß der Leitung 12 noch vernachlässigbar ist, und zwar auch dann, wenn die Elektrode 6 in vertikaler Richtung bewegt wird. Aufgrund dieser Messungen ermittelt der Mikrocomputer 26 eine bestimmte Schmelzrate. Steht die Elektrodenspitze nicht zentrisch im Tiegel, so wird die Elektrode 6 während der Schmelze mit der x-y-

Korrektureinrichtung nachzentriert. Dies wird vor allem dann notwendig, wenn eine Elektrode verwendet wird, die ähnlich wie eine Banane gekrümmt ist. Für das Schmelzergebnis ist es wichtig, daß die jeweilige Elektrodenspitze zentrisch im Tiegel steht.

Wird nun die Elektrode 6 in x-/y-Richtung bewegt, so wird die Leitung 36 etwas verformt, und das mit den Meßdosen 17, 18 gemessene Gewicht stimmt nicht mit dem tatsächlichen Gewicht der Elektrode überein. Die Verformungskräfte des Stromseiles 36 bleiben zwischen den sporadisch durchgeführten x-/y-Verstellungen konstant und verändern sich während der x-/y-Verstellungen. Die Verstellungen mit der erfindungsgemäßen x-/y-Verstelleinrichtung wirken auf die Gewichtsmeßeinrichtung wie Gewichtssprünge. Die Schmelzrate wird durch Differenzieren des Gewichtssignals erzeugt. Ein Gewichtssprung stellt somit eine erhebliche Störung der Schmelzratenermittlung und damit auch der Ratenregelung dar. Um auch in diesem Fall eine richtige Absenkung der Elektrode 6 zu gewährleisten, rechnet der Mikrocomputer 26 während einer x-/y-Korrektur aufgrund der zuvor ermittelten Schmelzrate das wahre Gewicht der Elektrode 6 hoch, d.h. er extrapoliert die frühere Schmelzrate linear. Gleichzeitig errechnet der Mikrocomputer permanent die Abweichung zwischen dem hochgerechneten "wahren" Gewichtswert und dem tatsächlich gewogenen Gewichtswert.

Nach Abschluß eines x-/y-Korrekturvorgangs und nachdem sich alles wieder stabilisiert hat, wird die Abweichung dem Taragewicht hinzugerechnet und anschließend wie vor dem Verstelleingriff die Schmelzrate aus der Gewichtsabnahme berechnet.

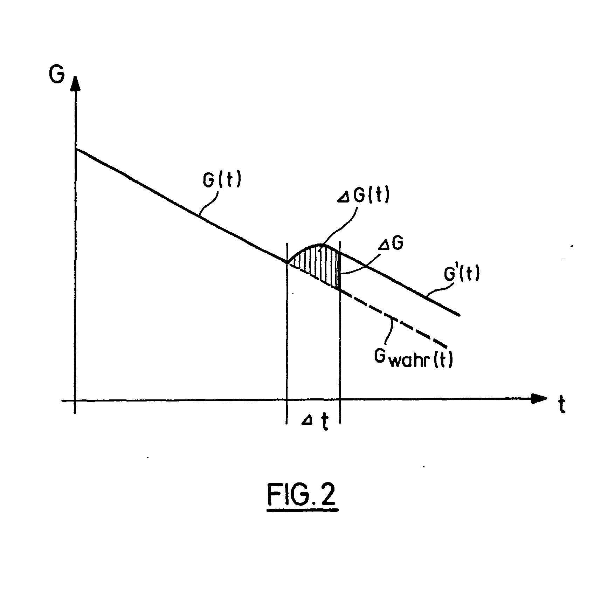

In der Fig. 2 ist eine graphische Darstellung gezeigt, welche die Korrektur der Elektroden-Absenkungssteuerung veranschaulicht. Man ersieht hierbei den Verlauf des Gewichts über der Zeit. Die dick ausgezogene Linie stellt G(t) dar und weist eine "Sprungstelle bei $\Delta t$ auf. Der Betrag, um den das Gewicht springt, ist mit $\Delta G$ bezeichnet. Unterhalb der Sprungstelle ist die Kurve G(t) zunächst gestrichelt und dann mit ausgezogener Linie linear fortgeführt. Die ausgezogene Linie ist mit $G_{wahr}$ bezeichnet.

Die in der Fig. 1 dargestellte Einrichtung bezieht sich auf das VAR-Ververfahren und nicht auf das ESU-Verfahren. Die Erfindung ist jedoch auf das ESU-Verfahren in entsprechender Weise anwendbar, so daß sich eine zusätzliche Darstellung erübrigt.

Bei der erfindungsgemäßen Einrichtung ist berücksichtigt, daß nach einer Korrektur der Elektrode in der Kokille die reale Schmelzrate verändert werden kann. Beim ESU-Verfahren wurde dies deutlich festgestellt, und beim VAR-Verfahren ist dies denkbar.

Ein Austasten der Ratenregelung sollte daher so kurz wie möglich sein.

Bei der erfindungsgemäßen Einrichtung sind, wie oben bereits angedeutet, zwei Alternativ-

zustände zu unterscheiden: daß eine x-y-Verstellung betätigt bzw. nicht betätigt wird. Der von der Wiegeelektronik kommende digitalisierte Gewichtswert wird in dem Fall, daß keine x-y-Verstellung betätigt wird bzw. in den letzten wenigen Sekunden (z.B. 20 Sekunden) nicht betätigt wurde, normal behandelt. Der Gewichtswert wird um den vorher eingegebenen Tarawert — also der toten Masse des mitgewogenen Ofenportals — korrigiert sowie um einen vorher festgelegten Korrekturwert. Das so korrigierte Gewichtssignal wird zur Ratenermittlung weitergeleitet.

Für den Fall, daß die x-y-Verstellung betätigt wird — und für einige Sekunden (z.B. 20 Sekunden) danach — werden die zyklisch ankommenden Signalwerte des Gewichts aufgrund der bisher ermittelten Schmelzrate hochgerechnet, und es wird gleichzeitig permanent die Abweichung zwischen dem so hochgerechneten Gewichtswert und dem tatsächlich gewogenen Wert ermittelt. Dieser Wert ist der neue Korrekturwert. Dieser Korrekturwert wird solange verändert, bis die x-y-Verstellung abgeschlossen ist und bis einige Sekunden für das Einpendeln der Gewichtsmeßvorrichtung abgelaufen sind.

Bezeichnet man mit m das aktuelle Gewicht, das auf den Rechenzyklus für Schmelzratenermittlung und die logischen Entscheidungen (z.B. Start-Hot-Topping) wirkt, bezeichnet man ferner mit $m_{-1}$ den letzten aktuellen Gewichtswert und ist $m_{Meß}$ der aktuelle Gewichtsmeßwert, während $\dot{m}$ die ermittelte Schmelzrate ist, so gilt dann, wenn keine x-y-Verstellung betätigt wird:

$$m = m_{Meß} - m_{Tar} + \Delta m$$

Wird dagegen die x-y-Verstellung betätigt, so gilt:

$$m = m_{-1} - \dot{m} \cdot \Delta t \text{ bzw.}$$

$$\Delta m = m - (m_{Meß} - m_{Tar})$$

worin $m_{Tar}$ das Tariergewicht beim Torienen ist.

**Patentansprüche**

1. Verfahren zum Kompensieren des Einflusses des Gewichts einer Stromzuführungsleitung (36) auf eine Gewichtmeßeinrichtung (17, 18), welche das Gewicht einer Elektrode (6) und/oder die Abschmelzrate bei einem Elektroschlackenum-schmelzverfahren, bei einem Vakuumlicht-bogenofen oder dergleichen erfaßt, dadurch gekennzeichnet, daß während eines Abschmelzvorgangs der Elektrode (6) der zeitliche Verlauf des Gewichts der Elektrode (6) gemessen wird; daß während einer horizontalen Verschiebung der Elektrode (6) und für einen bestimmten Zeitraum, der sich während einer Schmelze mehrmals wiederholen kann, der bisherige zeitliche Verlauf des gemessenen Gewichts hochgerechnet wird; daß während des bestimmten Zeitraums die Differenz zwischen dem hochgerechneten Gewicht und dem tatsächlich gemessenen Gewicht ermittelt wird; daß am Ende des bestimmten Zeitrams der letzte Wert der Differenz aus hochgerechnetem und gemessenem Gewicht abgespeichert wird und daß anschließend dieser abgespeicherte Wert als Korrekturwert zum jeweils tatsächlich gemessenen Gewichtswert hinzuaddiert wird.

2. Verfahren nach Anspruch 1, dadurch gekennzeichnet, daß als Gewicht der Elektrode (6) das reine Elektrodengewicht zuzüglich des Gewichts der Elektrodenhalterung gilt.

3. Verfahren nach Anspruch 1, dadurch gekennzeichnet, daß als Gewicht der Elektrode (6) das reine Elektrodengewicht zuzüglich des Gewichts einer Elektrodenstange (5) gilt.

4. Verfahren nach Anspruch 1, dadurch gekennzeichnet, daß über eine Leitung (40) einem Mikrocomputer (26) mitgeteilt wird, ob eine x- oder y-Verstellung der Elektrode (6) stattgefunden hat.

5. Verfahren nach Anspruch 1, dadurch gekennzeichnet, daß die der Elektrode (6) zugeführte Stromstärke von einem Mikrocomputer (26) gesteuert wird.

6. Verfahren nach Anspruch 1, dadurch gekennzeichnet, daß eine Vorrichtung (19) für die vertikale Absenkung der Elektrode (6) durch einen Mikrocomputer (26) gesteuert wird.

7. Verfahren nach Anspruch 1, dadurch gekennzeichnet, daß dem Mikrocomputer (26) die der Elektrode (6) zugeführte Stromstärke über eine Leitung rückgemeldet wird.

8. Verfahren nach Anspruch 1, dadurch gekennzeichnet, daß der Mikrocomputer (26) einen Drukker (27) und/oder einen Bildschirm (28) ansteuert.

9. Verfahren nach einem der vorangegangenen Ansprüche, dadurch gekennzeichnet, daß ein Motor (20) zu Korrekturzwecken kurzzeitig eingeschaltet wird.

10. Einrichtung zum Kompensieren des Einflusses des Gewichts einer Stromzuführungsleitung (36) auf eine Gewichtsmeßeinrichtung (17, 18), welche das Gewicht einer Elektrode (6) und/oder die Abschmelzrate bei einem Elektroschlackenumschmelzverfahren, bei einem Vakuumlichtbogenofen oder dergleichen erfaßt, dadurch gekennzeichnet, daß eine in verschiedene Richtungen bewegliche Elektrode (6) vorgesehen ist, die an einer ersten Polarität einer Gleichspannung anliegt, wobei diese Polarität über eine biegsame Leitung (36) an die Elektrode (6) herangeführt ist, daß diese Elektrode (6) einer zweiten Polarität gegenüberliegt, die über eine Leitung (13) an einen Tiegel (7) herangeführt ist; daß das Gewicht der Elektrode (6) über Meßeinrichtungen (18, 24) gemessen und einem Mikrocomputer (26) zugeführt ist, der eine Addierstelle (35) mit einem Sollwert ($H_S$) beaufschlagt, von dem der durch einen Tachogenerator (38) erzeugte Ist-Wert ($H_I$) abgezogen wird, wobei die Differenz zwischen Soll- und Istwert einer Motorsteuerschaltung (34) zugeführt wird, die einen Motor (19) ansteuert, der einen Elektrodenwagen (2) antreibt.

11. Einrichtung nach Anspruch 10, dadurch gekennzeichnet, daß der Mikrocomputer (26) außer mit einem Gewichtssignal (G) auch noch mit einem Korrektursignal (K) beaufschlagt wird, das von einem Antrieb (20) für die vertikale Bewegung der Elektrode (6) abgeleitet ist.

12. Einrichtung nach Anspruch 10 oder 11, dadurch gekennzeichnet, daß dem Mikrocomputer (26) über Leitungen (33, 37) die Spannung mitgeteilt wird, die zwischen der Elektrode (6) und dem Tiegel (7) anliegt.

13. Einrichtung nach einem der Ansprüche 10—12, dadurch gekennzeichnet, daß die Dauer, für welche der Antrieb (20) durch Anlegen einer Energieversorgung (21) über einen Schalter (22) betätigbar ist, steuerbar ist.

14. Einrichtung nach einem der Ansprüche 10—13, dadurch gekennzeichnet, daß der Mikrocomputer (26) über eine Addierstelle und eine Verstärkereinrichtung (32) die Stromstärke beeinflußt, die über die Elektrode (6) und den Tiegel (7) bzw. über die Zuführungsleitungen (12, 13) fließt.

## Revendications

1. Procédé de compensation de l'influence du poids d'un conducteur d'arrivée du courant (36) sur un dispositif (17, 18) de mesure du poids qui saisit le poids d'une électrode (6) et/ou le débit de fusion dans le cas d'un procédé de refusion du laitier électrique, dans le cas d'un four à arc électrique sous vide ou analogue, caractérisé en ce que, pendant le processus de fusion de l'électrode (6), on mesure l'allure. en fonction du temps, du poids de l'électrode (6); en ce que, pendant un déplacement horizontal de l'électrode (6) et pour une période déterminée qui peut se répéter plusieurs fois au cours d'une fusion, on établit, par un calcul de probabilité, l'allure antérieure, en fonction du temps, du poids mesuré; en ce que, pendant la période déterminée, on détermine la différence entre le poids résultant des calculs de probabilité et le poids effectivement mesuré; en ce qu'à la fin de la période déterminée, on mémorise la dernière valeur de la différence entre le poids établi par le calcul de probabilité et le poids mesuré et que l'on ajoute ensuite cette valeur mémorisée, en tant que valeur correctrice, à la valeur du poids effectivement mesurée chaque fois.

2. Procédé selon la revendication 1, caractérisé en ce que sous le nom de poids de l'électrode (6) il faut comprendre le poids de l'électrode proprement dite auquel s'ajoute le poids du support de l'électrode.

3. Procédé selon la revendication 1, caractérisé en ce que sous le nom de poids de l'électrode (6) il faut comprendre le poids de l'électrode proprement dite auquel s'ajoute le poids d'une barre porte-électrode (5).

4. Procédé selon la revendication 1, caractérisé en ce que, par l'intermédiaire d'un conducteur (40), on communique à un micro-ordinateur (26) s'il s'est produit un déplacement de l'électrode (6) selon x ou selon y.

5. Procédé selon la revendication 1, caractérisé en ce que l'intensité du courant amenée à l'électrode (6) est commandée par un micro-ordinateur (26).

6. Procédé selon la revendication 1, caractérisé en ce qu'on mécanisme (19) de descente verticale de l'électrode (6) est commandé par un micro-ordinateur (26).

7. Procédé selon la revendication 1, caractérisé en ce que l'on envoie en retour au micro-ordinateur (26), par l'intermédiaire d'un conducteur, l'intensité du courant amené à l'électrode (6).

8. Procédé selon la revendication 1, caractérisé en ce que le micro-ordinateur (26) pilote une imprimante (27) et/ou un écran (28).

9. Procédé selon l'une des revendications précédentes, caractérisé en ce que l'on met en circuit temporairement un moteur (20) aux fins de correction.

10. Dispositif de compensation de l'influence du poids d'un conducteur d'arrivée du courant (36) sur un dispositif (17, 18) de mesure du poids qui saisit le poids d'une l'électrode (6) et/ou le débit de fusion dans le cas d'un procédé de refusion du laitier électrique, dans le cas d'un four à arc électrique sous vide ou analogue, caractérisé en ce qu'il est prévu une électrode (6) qui est mobile dans différentes directions et à laquelle s'applique une première polarité d'une tension continue, cette polarité étant amenée à l'électrode (6) par l'intermédiaire d'un conducteur flexible (36); en ce qu'en face de cette électrode (6) arrive une seconde polarité amenée à un creuset (7) par l'intermédiaire d'un conducteur (13); en ce que le poids de l'électrode (6) est mesuré au moyen de dispositifs de mesure (18, 24) et envoyé à un micro-ordinateur (26) qui prescrit à une position d'addition (35) une valeur prescrite ($H_s$) dont on soustrait · la valeur réelle ($H_I$) établie par une génératrice tachymétrique (38), la différence entre la valeur prescrite et la valeur réelle étant envoyée à un circuit pilote (34) qui pilote un moteur (19) qui entraine un chariot porte-électrode (2).

11. Dispositif selon la revendication 10, caractérisé en ce qu'en dehors d'un signal de poids (G), le micro-ordinateur reçoit également un signal correcteur (K) qui provient d'un mécanisme d'entrainement (20) pour le mouvement vertical de l'électrode (6).

12. Dispositif selon la revendication 10 ou 11, caractérisé en ce que, par l'intermédiaire de conducteurs (33, 37), on communique au micro-ordinateur (26) la tension existant entre l'électrode (6) et le creuset (7).

13. Dispositif selon l'une des revendications 10 à 12, caractérisé en ce que l'on peut commander la durée pendant laquelle le mécanisme d'entrainement (20) peut être activé par application d'une source d'énergie (21) par l'intermédiaire d'un interrupteur (22).

14. Dispositif selon l'une des revendications 10 à 13, caractérisé en ce que, par l'intermédiaire d'une position d'addition et d'un dispositif amplificateur (32), le micro-ordinateur (26) influence l'intensité du courant qui passe par l'électrode (6) et par le creuset (7) ou par les conducteurs d'arrivée (12, 13).

## Claims

1. A method of compensating for the effect of the weight of a power supply line (36) on a weighing apparatus (17, 18) which determines the weight of an electrode (6) and/or the melting rate in an electro-slag remelting process in a vacuum arc furnace or the like, characterised in that the variation in the weight of the electrode (6) with respect to time is measured during a melting process of the electrode (6); that the previous characteristic of the measured weight with respect to time is projected during a horizontal displacement of the electrode (6) and for a specific period of time which can be repeated several times during a melting; that the difference between the projected weight and the weight actually measured is determined during the specific period of time; that the last value of the difference between the projected and the measured weight is stored at the end of the specific period of time, and that this stored value is subsequently added as a correction value to the weight value actually measured at any one time.

2. A method as claimed in claim 1, characterised in that the pure weight of the electrode plus the weight of the electrode holder is regarded as the weight of the electrode (6).

3. A method as claimed in claim 1, characterised in that the pure weight of the electrode plus the weight of an electrode rod (5) is regarded as the weight of the electrode (6).

4. A method as claimed in claim 1, characterised in that a microcomputer (26) is informed by way of a line (40) whether an x or y adjustment of the electrode (6) has taken place.

5. A method as claimed in claim 1, characterised in that the current intensity fed to the electrode (6) is controlled by a microcomputer (26).

6. A method as claimed in claim 1, characterised in that a device (19) for the perpendicular lowering of the electrode (6) is controlled by a microcomputer (26).

7. A method as claimed in claim 1, characterised in that the current intensity fed to the electrode (6) is signalled back to the microcomputer (26) by way of a line.

8. A method as claimed in claim 1, characterised in that the microcomputer (26) controls a printer (27) and/or a screen (28).

9. A method as claimed in one of the preceding claims, characterised in that a motor (20) is switched on momentarily for correction purposes.

10. A device for compensating for the effect of the weight of a power supply line (36) on a weighing apparatus (17, 18) which determines the weight of an electrode (6) and/or the melting rate in an electro-slag remelting process, in a vacuum arc furnace or the like, characterised in that there is provided an electrode (6) which is movable in different directions and is connected to a first polarity of a d.c. voltage, this polarity being fed to the electrode (6) by way of a flexible line (36), that this electrode (6) is located opposite a second polarity which is fed to a crucible (7) by way of a line (13); that the weight of the electrode (6) is measured by way of measuring devices (18, 24) and fed to a microcomputer (26) which acts upon an adding location (35) with a desired value $(H_s)$ from which the actual value $(H_l)$ generated by a tachogenerator (38) is subtracted, the difference between the desired value and the actual value being fed to a motor control circuit (34) controlling a motor (19) which drives an electrode carrier (2).

11. A device as claimed in claim 10, characterised in that, in addition to being acted upon by a weight signal (G), the microcomputer (26) is also acted upon by a correction signal (K) which is derived from a drive (20) for the vertical movement of the electrode (6).

12. A device as claimed in claim 10 or 11, characterised in that the voltage applied between the electrode (6) and the crucible (7) is communicated to the microcomputer (26) by way of lines (33, 37).

13. A device as claimed in one of the claims 10 to 12, characterised in that the period of time for which the drive (20) is operable by applying a power supply (21) by way of a switch (22), is controllable.

14. A device as claimed in one of the claims 10 to 13, characterised in that the microcomputer (26) influences, by way of an adding location and an amplifier device (32), the current intensity which flows through the electrode (6) and the crucible (7) or through the supply lines (12, 13).

## FIG.1

FIG.2